# EUROPÄISCHE PATENTANMELDUNG

(11) **EP 2 141 763 A2**
(43) Veröffentlichungstag der Anmeldung: **06.01.2010**
(21) Anmeldenummer: 09008771.9
(22) Anmeldetag: 03.07.2009
(51) Int. Cl.: H01M 10/48, H01M 10/50

(54) **Akkumulator mit verlängerter Lebensdauer**

(30) Priorität: 03.07.2008 DE 102008031538
(71) Anmelder: Li-Tec Battery GmbH, 01917 Kamenz (DE)
(72) Erfinder: Hofmann, Jürgen, 01917 Kamenz (DE); Mickel, Magnus, 02997 Wittichenau (DE); Eichinger, Günter, Dr., 63674 Altenstadt (DE); Schäfer, Tim, 99762 Niedersachswerfen (DE)
(74) Vertreter: Wallinger, Michael

(57) **Zusammenfassung**

Die vorliegende Erfindung betrifft einen Akkumulator mit verlängerter Lebensdauer. Die Erfindung wird in bezug auf einen Lithium-Ionen-Akkumulator zur Versorgung eines Kraftfahrzeugantriebs beschrieben. Es wird jedoch darauf hingewiesen, dass die Erfindung auch bei Batterien ohne Lithium und/oder auch unabhängig von Kraftfahrzeugen Anwendung finden kann.

## Beschreibung

Die vorliegende Erfindung betrifft einen Akkumulator mit verlängerter Lebensdauer. Die Erfindung wird in bezug auf einen Lithium-lonen-Akkumulator zur Versorgung eines Kraftfahrzeugantriebs beschrieben. Es wird jedoch darauf hingewiesen, dass die Erfindung auch bei Batterien ohne Lithium und/oder auch unabhängig von Kraftfahrzeugen Anwendung finden kann.

Aus dem Stand der Technik sind Akkumulatoren mit galvanischen Zellen zur Speicherung elektrischer Energie bekannt. Dabei wird die einem Akkumulator zugeführte elektrische Energie in chemische Energie gewandelt und gespeichert. Diese Wandlung ist verlustbehaftet. Während dieser Wandlung treten ferner unumkehrbare chemische Reaktionen auf, welche eine Alterung des Akkumulators bewirken. Mit steigender Temperatur innerhalb einer galvanischen Zelle eines Akkumulators sind neben schnellerer Wandlung der Energie aber auch die Alterung beschleunigt. Insbesondere während der Beschleunigung eines elektrisch angetriebenen Kraftfahrzeugs werden dem Akkumulator über kurze Zeiträume hohe elektrische Ströme entnommen. Diese hohen elektrischen Ströme treten auch auf, wenn die Verzögerung eines KFZ von elektrischen Einrichtungen unterstützt und die gewonnene Energie dem Akkumulator zugeführt wird.

Dabei ist nachteilig, dass diese kurzzeitigen hohen Ströme den Akkumulator vorzeitig altern lassen.

Der vorliegenden Erfindung liegt daher die Aufgabe zugrunde die Lebensdauer derart betriebener Akkumulatoren zu erhöhen. Dies wird erfindungsgemäß durch die Gegenstände der unabhängigen Ansprüche erreicht. Vorteilhafte Ausführungsformen und Weiterbildungen sind Gegenstand der Unteransprüche.

Eine erfindungsgemäße Vorrichtung zur Speicherung elektrischer Energie weist wenigstens eine galvanische Zelle auf. Diese ist wenigstens teilweise von einer Zellhülle umgeben. Weiterhin weist die Vorrichtung wenigstens eine Wärmeleiteinrichtung auf, welche mit dieser galvanischen Zelle wirkverbunden ist. Diese Wärmeleiteinrichtung ist geeignet, dieser galvanischen Zelle Wärmeleistung zuzuführen und/oder aus dieser galvanischen Zelle abzuführen. Weiter weist die Vorrichtung eine Zellhalteeinrichtung auf. Diese umschließt mit einer Wandung wenigstens teilweise einen Innenraum. Dieser ist geeignet, diese wenigstens eine galvanische Zelle aufzunehmen. Dabei ist die Zellhülle mit dieser Wandung thermisch wenigstens teilweise wirkverbunden. Weiter weist die Vorrichtung wenigstens eine erste Messeinrichtung auf. Diese ist geeignet, eine Temperatur an einer vorgegebenen Position dieser galvanischen Zelle zu erfassen. Weiter weist die Vorrichtung eine Steuereinrichtung auf. Diese ist wenigstens geeignet, die Signale der vorhandenen ersten Messeinrichtungen auszuwerten und/oder vorhandene Wärmeleiteinrichtungen zu steuern. Dabei sind zwischen dieser Zellhülle der Wandung dieser Zellhaltereinrichtung und/oder einer weiteren vorhandenen Zellhülle Wärmeleitmittel angeordnet.

Bei der Vorrichtung zur Speicherung elektrischer Energie mit wenigstens einer galvanischen Zelle handelt es sich um eine Primär- oder Sekundärbatterie, welche elektrische Energie durch Umwandlung aus chemischer Energie zur Verfügung stellt. Sofern die Vorrichtung als Sekundärbatterie ausgebildet ist, ist sie auch geeignet, elektrische Energie aufnehmen, in chemische Energie umwandeln und als chemische Energie abspeichern. Die Vorrichtung weist neben wenigstens einer galvanischen Zelle verschiedene weitere Einrichtungen für einen geordneten Betrieb auf und versorgt einen Kraftfahrzeugantrieb.

Diese erfindungsgemäße Vorrichtung weist wenigstens eine galvanische Zelle auf, weist aber vorzugsweise zur Erhöhung der elektrischen Spannung und/oder der enthaltenen Ladungsmenge eine Vielzahl von Zellen in Parallel- und/oder Reihenschaltung auf. Auch sind vorzugsweise beispielsweise je vier galvanische Zellen zur Erzielung einer vorgegebenen Betriebsspannung als Gruppe in Reihe geschaltet. Mehrere solcher Gruppen sind vorzugsweise parallel geschaltet und speichern eine größere Ladungsmenge.

Eine solche galvanische Zelle ist von einer Zellhülle umgeben. Diese Zellhülle schützt die galvanische Zelle und deren Chemie vor schädigenden äußeren Einflüssen, beispielsweise aus der Atmosphäre. Diese Zellhülle ist vorzugsweise durch gasdichter und elektrisch isolierender Feststoff oder Schichtverbund gebildet, beispielsweise eine verschweißte Folie. Vorzugsweise ist die Zellhülle dünnwandig und wärmeleitend ausgebildet. Diese Zellhülle umschließt die galvanische Zelle vorzugsweise möglichst eng. Es ist nicht erforderlich, dass diese galvanische Zelle gänzlich von der Zellhülle umgeben ist. Die Zellhülle kann auch nur Teile dieser galvanischen Zelle umgeben.

Eine Wärmeleiteinrichtung weist eine erhöhte Wärmeleitfähigkeit auf und wird verwendet, um einer wirkverbundenen galvanischen Zelle Wärmenergie zuführen. Das ist insbesondere bei geringen Umgebungstemperaturen von Vorteil. Ferner führt eine Wärmeleiteinrichtung vorzugsweise Wärmenergie aus einer wirkverbundenen galvanischen Zelle ab. Das erfolgt vorzugsweise, wenn dieser galvanischen Zelle ein hoher elektrischer Strom zugeführt oder entnommen wird. Diese hohen Ströme bewirken eine Erwärmung der galvanischen Zelle, wobei eine zu hohe Temperatur einer Zelle aber deren Lebensdauer verkürzt. Mittels einer wirkverbundenen Wärmeleiteinrichtung wird der galvanischen Zelle vorzugsweise Wärme entnommen und die Zelle geschont. Diese hohen Ströme treten überwiegend während Beschleunigungsphasen des Kfz bzw. während Verzögerungsphasen desselben auf, wenn die Verzögerung beispielsweise durch einen generatorisch wirkenden Elektromotor erfolgt. Unter wirkverbunden ist zu verstehen, dass die galvanische Zelle mit dieser Wärmeleiteinrichtung wenigstens in thermischen Kontakt steht.

Die Vorrichtung weist eine Zellhalteeinrichtung auf. Diese weist einen geometrisch an die aufgenommenen galvanischen Zellen angepassten Innenraum und eine diesen Innenraum wenigstens teilweise umgebende Wandung auf. Diese Zellhalteeinrichtung nimmt vorzugsweise zusätzlich zu den galvanischen Zellen weitere Einrichtungen auf, beispielsweise Messeinrichtungen, Steuereinrichtungen sowie andere zum Betrieb des Akkumulators erforderliche Einrichtungen oder Bauteile. Die Wandung gestattet auch eine Verbindung und Befestigung mit dem Kraftfahrzeug. Auch aus wirtschaftlichen Erwägungen ist die Wandung vorzugsweise dünn ausgebildet. Die Wandung umschließt die aufgenommenen galvanischen Zellen vorzugsweise eng und wärmeleitend, so dass die Zellhüllen der galvanischen Zellen mit dieser Wandung große Wärmeleistungen austauschen. Vorzugsweise geben diese galvanischen Zellen Wärme an die Wandung abgeben oder nehmen Wärme von ihr auf. Die Vorrichtung weist wenigstens erste Messeinrichtungen auf, welche die Temperatur an einer vorgegebenen Stelle einer galvanischen Zelle feststellen. Dabei sind vorzugsweise auch mehrere Messmittel zur Erfassung von Temperaturen an verschiedenen Positionen einer galvanischen Zelle mit einer Messeinrichtung verbunden. Diese Messeinrichtung ist geeignet, jederzeit die Signale der Messmittel aufzunehmen. Aus praktischen Erwägungen und zur Verringerung der Datenmenge erfolgt die Erfassung vorzugsweise nur von Zeit zur Zeit. Das ist auch von den beteiligten Wärmekapazitäten und Wärmeübertragungskoeffizienten abhängig. Eine erste Messeinrichtung gibt Signale an eine ebenfalls vorhandene Steuereinrichtung weiter. Vorzugsweise löst diese Steuereinrichtung die Erfassung von Temperaturen durch eine erste Messeinrichtung in Abhängigkeit von den Betriebsbedingungen aus.

Die Vorrichtung weist eine Steuereinrichtung auf. Diese Steuereinrichtung steuert wenigstens die vorhandenen ersten Messeinrichtungen und wertet deren Signale aus. Das geschieht auf Grundlage vorgegebener Rechenvorschriften. Diese tragen unterschiedlichen Kennlinien der einzelnen Messmittel Rechnung. Auch ist die Steuereinrichtung zur Steuerung vorhandener Wärmeleiteinrichtungen geeignet. Dabei werden, je nach Betriebszustand einer galvanischen Zelle, einzelne oder mehrere Wärmeleiteinrichtungen geschaltet. Die Funktionen dieser Steuereinrichtung der erfindungsgemäßen Vorrichtung können auch von einer anderen Steuerung oder Batteriemanagementsystem übernommen werden.

Vorzugsweise weist ein Wärmeleitmittel eine erhöhte Wärmeleitfähigkeit auf, ist als möglichst dünne Schicht ausgebildet. Geeignet sind Pasten, welche beispielsweise mit einem Pinsel oder einer Rolle aufgetragen werden. Folien, welche aufgelegt oder aufgeklebt werden, oder dünne zugeschnittene Matten. Diese Wärmeleitmittel diesen der Vermeidung von Lufteinschlüssen, der Vergrößerung wärmeübertragender Flächen und somit der Erhöhung übertragener Wärmeleistungen. Kühlung oder Erwärmung der vom Innenraum aufgenommen galvanischen Zellen werden durch diese Wärmeleitmittel verbessert. Vorteilhaft werden Wärmeleitmittel auf solche Flächen aufgebracht, die der Wärmeübertragung von einer Einrichtung auf eine andere dienen. Besonders bevorzugt sind Wärmeleitmittel zwischen einzelnen galvanischen Zellen und/oder zwischen galvanischen Zellen und beispielsweise der Wandung der Zellhalteeinrichtung angeordnet.

Vorteilhaft wird eine erfindungsgemäße Vorrichtung so betrieben, dass deren Steuereinrichtung zunächst die Temperatur an einem vorgegebenen Ort einer galvanischen Zelle erfassen. Abhängig von dieser Temperatur schaltet diese Steuereinrichtung eine Wärmeleiteinrichtung ein oder aus. Vorzugsweise schaltet die Steuereinrichtung Fördereinrichtungen für Fluide ein oder aus. So wird einer vorzeitigen Alterung einer Vorrichtung zur Speicherung elektrischer Energie abgeholfen und deren Lebensdauer verlängert.

Vorteilhaft ist diese Steuereinrichtung mit einer Speichereinrichtung verbunden. Diese dient zum Abspeichern von erfassten Daten, ausgewerteten Messwerten und/oder Rechenvorschriften. Gemeinsam mit einem Messwert oder einem ausgewerteten Messwert wird ein weiterer Wert abgespeichert, welcher vertretend für den Zeitpunkt der Messung ist. Vorzugsweise sind Vorgaben bzw. Zielwerte zu einem gemessenen Parameter, wie beispielsweise der Temperatur einer Zelle, in dieser Speichereinrichtung abgespeichert.

Besonders vorteilhaft weist die Vorrichtung eine Steuereinrichtung, eine zugeordnete Speichereinrichtung und wenigstens eine erste Messeinrichtung auf. Diese Steuereinrichtung ist geeignet, eine Differenz aus einem Messwert bzw. Signal dieser ersten Messeinrichtung und einem vorgegebenen Wert zu bilden. Abhängig von dieser Temperaturdifferenz schaltet diese Steuereinrichtung eine Wärmeleiteinrichtung ein oder aus. Vorzugsweise schaltet die Steuereinrichtung Fördereinrichtungen für Fluide ein oder aus. So wird einer vorzeitigen Alterung einer Vorrichtung zur Speicherung elektrischer Energie abgeholfen und deren Lebensdauer verlängert.

Vorteilhaft ist die erfindungsgemäße Vorrichtung auch mit wenigstens einer zweiten Messeinrichtung ausgestattet. Diese ist geeignet, den Lade- oder Entladestrom in oder aus einer zugeordneten galvanischen Zelle zu erfassen und dieser Steuereinrichtung zu übermitteln. Dabei entspricht die Anzahl beider Messeinrichtungen der Anzahl galvanischer Zellen, ist vorzugsweise aber auch geringer. Die Erfassung der Stromstärke erfolgt ständig, vorzugsweise aber nach Vorgabe dieser Steuereinrichtung in Abhängigkeit von den Betriebsbedingungen.

Besonders vorteilhaft weist die Vorrichtung eine Steuereinrichtung, eine zugeordnete Speichereinrichtung, wenigstens eine erste Messeinrichtung und wenigstens eine zweite Messeinrichtung auf. Diese Steuereinrichtung ist geeignet, eine Differenz aus einem Messwert bzw. Signal dieser ersten Messeinrichtung und einem vorgegebenen Wert zu bilden. Weiter ist diese Steuereinrichtung geeignet, die Messwerte einer ersten Messeinrichtung mit einem Signal einer zweiten Messeinrichtung unter Verwendung einer abgespeicherten Rechenvorschrift zu verknüpfen. Bei geeigneter Verknüpfung gemessener Stromstärken und ermittelter Temperaturen bzw. Temperaturdifferenzen schätzt die Steuereinrichtung vorzugsweise die künftige zeitliche Entwicklung der Zelltemperatur unter Verwendung abgespeicherter Rechenvorschriften. In Erwartung einer künftigen Temperaturänderung einer galvanischen Zelle schaltet die Steuereinrichtung vorzugsweise Wärmeleiteinrichtungen und/oder Fördereinrichtungen für ein Fluid ein bzw. aus. Beispielsweise schaltet die Steuereinrichtung bei einem hohen Entladestrom während einer Beschleunigungsphase des Kraftfahrzeugs bereits vor einem merklichen Anstieg einer Zelltemperatur eine Fördereinrichtung für ein Fluid und/oder eine Wärmeleiteinrichtung ein.

Bevorzugt weisen eine oder mehrere galvanische Zellen eine prismatische Grundfläche auf, besonders bevorzugt eine rechteckige Grundfläche. Solche quaderförmigen galvanischen Zellen lassen sich besonders gut untereinander in thermischen Kontakt bringen und vom Innenraum aufnehmen. Auch weist eine galvanische Zelle bevorzugt einen im wesentlichen plattenförmigen Stromableiter als Wärmeleiteinrichtung auf. Dieser Stromableiter leitet den elektrischen Strom aus dieser galvanischen Zelle heraus bzw. in sie hinein. Dieser Stromableiter ist bevorzugt metallisch und weist eine hohe Wärmeleitfähigkeit auf. Diese hohe Wärmeleitfähigkeit bewirkt, dass innerhalb eines Stromableiters nur geringe Temperaturgradienten auftreten und hohe Wärmeströme in oder aus der galvanischen Zelle geleitet werden. Ein erster Bereich des Stromableiters ist innerhalb einer galvanischen Zelle angeordnet.

Ein zweiter Bereich des Stromableiters erstreckt sich aus dieser galvanischen Zelle. Zur Verbesserung der Wärmeabfuhr bzw. Wärmeeinleitung ist dieser zweite Bereich mindestens so breit, wie der erste Bereich des Stromableiters innerhalb der galvanischen Zelle. Der Stromableiter ist bevorzugt plattenförmig ausgebildet und wird durch Plattendicke, Breite und Höhe/Länge beschrieben. Die Höhe wird entlang einer Kante des plattenförmigen Stromableiters gemessen, welche sich über den ersten Bereich und zweiten Bereich aus der galvanischen Zelle heraus erstreckt. Aus praktischen Erwägungen wird der zweite Bereich eines Stromableiters durch Wärmeleitung an einen Kühlkörper oder Konvektion gekühlt bzw. erwärmt. Dieser Kühlkörper ist mit dem Stromableiter vorzugsweise unter Verwendung eines Wärmeleitmittels thermisch verbunden. Dieser Kühlkörper oder dieser Stromableiter werden vorzugsweise wenigstens teilweise von einem ersten Fluid umströmt. Abhängig von den Temperaturen einerseits des umströmenden ersten Fluids und andererseits des Stromableiters bzw. des Kühlkörpers wird der galvanischen Zelle Wärme zugeführt oder aber ihr entnommen. Vorzugsweise weist der Kühlkörper Kupfer, besonders bevorzugt Kupfer und Aluminium auf. Dabei steht besonders bevorzugt ein kupferhaltiger Bereich des Kühlkörpers mit dem Stromableiter in thermischen Kontakt, während ein aluminiumhaltiger Bereich dieses Kühlkörpers von diesem ersten Fluid angeströmt wird.

Einem Kunststoff bzw. Kunstharz können zur Erhöhung der thermischen bzw. elektrischen Leitfähigkeit beispielsweise metallische Partikel zugegeben werden. Je nach Funktion der benachbarten Bauteile ist ein Wärmeleitmittel vorzugsweise elektrisch isolierend. Ein elektrisch isolierendes und gleichzeitig wärmeleitendes Wärmeleitmittel von vorgegebener Gestalt, ein sogenanntes "Wärmepad", weist beispielsweise Glimmer, verschiedene Arten von Keramik (beispielsweise Al₂O₃, BeO), Silikongummi, Diamant, Kohlenstoff-Nanoröhren, Polyimid oder einen anderen Kunststoff auf. Auch sind verschiedene Klebstoffe nach Zugabe metallischer Partikel als Wärmeleitmittel geeignet. Dabei verbindet ein wärmeleitender Klebstoff die benachbarten Bauteile zusätzlich stoffschlüssig.

Neben den vorgenannten Stromableitern weist eine galvanische Zelle vorzugsweise aktive Wärmeleiteinrichtungen auf. Diese weisen bevorzugt wenigstens einen Fluidkanal und ein darin enthaltenes zweites Fluid auf. Dieses zweite Fluid durchströmt diesen Fluidkanal oder ist in diesem Fluidkanal festgehalten, sofern dieser Fluidkanal als geschlossener Raum ist. Abhängig von den herrschenden Temperaturen und der chemischen Zusammensetzung des zweiten Fluids ist dieses Phasenänderungen unterworfen, vorzugsweise von flüssig nach gasförmig oder umgekehrt. In einer Ausführungsform wird dieses zweite Fluid diesem ersten Fluidkanal mit vorgegebener Temperatur zunächst zugeführt und nach Wärmeabgabe bzw. -aufnahme wieder abgeführt. Der Fluidkanal weist einen dritten Bereich innerhalb der Zelle oder in thermischem Kontakt mit dieser Zelle auf. Der Fluidkanal weist vorzugsweise auch einen vierten Bereich außerhalb der Zelle auf. Dieser vierte Bereich ist vorzugsweise von einem dritten Fluid wenigstens teilweise umströmt und/oder mit einem Kühlkörper wärmeleitend verbunden. Dieses dritte Fluid strömt vorzugsweise auch diesen Kühlkörper an.

Vorzugsweise weist die Vorrichtung einen Behälter auf. Dieser ist beispielsweise mit der Zellaufnahme verbunden. Dieser Behälter weist wenigstens eine Schließeinrichtung auf und ist mit einer dritten Substanz gefüllt. Diese Schließeinrichtung ist geeignet, von dieser Steuereinrichtung geöffnet zu werden. Anschließend tritt diese dritte Substanz aus diesem Behälter aus. Diese dritte Substanz tritt dabei vorzugsweise in Richtung wenigstens einer galvanische Zelle aus, beispielweise durch einen vorgesehenen Kanal. Nach vorgegebener Zeit bzw. nach vorgegebener ausgetretener Menge dritter Substanz schließt die Steuereinrichtung diese Schließeinrichtung. Die Substanz durchläuft spätestens nach Auftreffen auf diese galvanische Zelle eine Phasenänderung, bei dem Wärmenergie aufgenommen oder abgegeben wird. Der Behälter ist vorzugsweise mit mehreren Kanälen verbunden, welche auf verschiedene galvanische Zellen gerichtet sind. Mit Verwendung einzelner Kanäle werden bei Bedarf auch nur einzelne galvanische Zellen mit dieser dritten Substanz versorgt. Derart versorgte Zellen werden mit der Phasenänderungsenergie erwärmt oder abgekühlt. Vorzugsweise ist eine Schließeinrichtung zusätzlich mit einem temperaturempfindlichen Schalter ausgerüstet, beispielweise mit einem Bimetallschalter. Eine derartige Ausbildung ermöglicht vorteilhaft die Abgabe bzw. Aufnahme von Wärmeenergie auch bei nicht betriebsbereiter bzw. ausgefallener Steuerung, Wärmeleiteinrichtung und/oder Fördereinrichtung für ein Fluid.

Vorteilhaft weist die Wandung dieser Zellhaltereinrichtung wenigstens eine aushärtbare erste Substanz sowie hochwärmeleitfähige eingebettete Partikel auf. Vorteilhaft ist diese Wandung dünnwandig zur Verringerung des thermischen Widerstands und eng an den galvanischen Zellen anliegend ausgebildet. Besonders vorteilhaft sind die aufgenommenen galvanischen Zellen von dieser Wandung wenigstens teilweise umgossen, so dass ein guter Wärmeübergang der aufgenommenen galvanischen Zellen zur Wandung gegeben ist. Vorzugsweise weist diese Wandung wenigstens einen zweiten Fluidkanal auf. Dieser zweite Fluidkanal wird von einem vierten Fluid durchströmt, welches mit vorgegebener Temperatur zugeführt wird. Nach Verlassen dieses zweiten Fluidkanals wird dieses vierte Fluid beispielsweise von einer fahrzeugseitigen oder einer unabhängigen Kühl- oder Heizeinrichtung aufbereitet. Vorzugsweise weist diese Wandung eine vorbereitete Verbindungsfläche zum thermischen Kontakt mit einem Verdampfer oder Kühler auf. Dieser tauscht Wärmeenergie beispielsweise mit der Umgebungsluft oder mit der Klimaanlage des Kraftfahrzeugs aus.

Vorteilhaft weist die Wandung wenigstens teilweise eine zweite Substanz auf. Diese zweite Substanz ist geeignet, während des Betriebs des Akkumulators und/oder bei vorgegebener Temperatur Phasenänderungen zu durchlaufen. Diese zweite Substanz ist beispielsweise in einem vorgegebenen Raum in oder an der Wandung der Zellhalteeinrichtung enthalten. Diese Wandung weist beispielsweise wenigstens teilweise oder überwiegend diese zweite Substanz auf. Eine Phasenänderung dieser zweiten Substanz erfolgt bei einer stoffspezifischen Temperatur und beeinflusst somit auch die Temperatur einer galvanischen Zelle. Eine derartige Ausbildung der Wandung der Zellhalteeinrichtung ermöglicht vorteilhaft die Abgabe bzw. Aufnahme von Wärmeenergie auch bei nicht betriebsbereiter bzw. ausgefallener Steuerung. Wärmeleiteinrichtung und/oder Fördereinrichtung für ein Fluid.

Die Anwendung der Erfindung auf Sekundärbatterien bzw. Akkumulatoren oder Primärbatterien mit hoher Leistungs- bzw. Energiedichte ist mit Vorteilen verbunden. Solche Akkumulatoren zeigen bei Betriebsbedienungen mit kurzfristigen hohen Strömen merkliche Temperaturänderungen, insbesondere Temperaturerhöhungen. Merkliche und wiederkehrende Temperaturerhöhungen lassen den Akkumulator schneller altern. Das trifft insbesondere auch auf Nickel-Metallhydrid- Akkumulatoren oder Lithium-lonen-Akkumulatoren zu. Eine erfindungsgemäße Ausbildung solcher Akkumulatoren erhöht deren Lebensdauer durch vorbeugende Maßnahmen zur Temperaturführung, d.h. zum geplanten zeitlichen Temperaturverlauf der einzelnen galvanischen Zellen.

Vorteilhaft wird die Zellhaltereinrichtung für eine erfindungsgemäße Vorrichtung unter Verwendung einer Form und zumindest einer aushärtbaren ersten Substanz hergestellt. Dazu werden die aufzunehmenden galvanischen Zellen in dieser Form angeordnet zueinander positioniert. Etwaige Zwischenräume zwischen diesen galvanischen Zellen werden mit Wärmeleitmittein, vorzugsweise Wärmeleitfolien, gefüllt. Anschließend werden diese Zellen gegeneinander gepresst, um eine gute thermische Verbindung zwischen diesen galvanischen Zellen zu erreichen. Als nächstes werden vorgesehene Hohlräume innerhalb dieser Form mit dieser aushärtbaren ersten Substanz ausgegossen. Anschließend wird dieser aushärtbaren ersten Substanz Gelegenheit zum Aushärten gegeben.

Weitere Vorteile, Merkmale und Anwendungsmöglichkeiten der vorliegenden Erfindung ergeben sich aus der nachfolgenden Beschreibung in Zusammenhang mit den Figuren. Es zeigt:
- Fig. 1: einen erfindungsgemäßen Akkumulator im Schnitt.
- Fig. 2: eine erfindungsgemäße Anordnung von Steuer- und Messeinrichtungen.

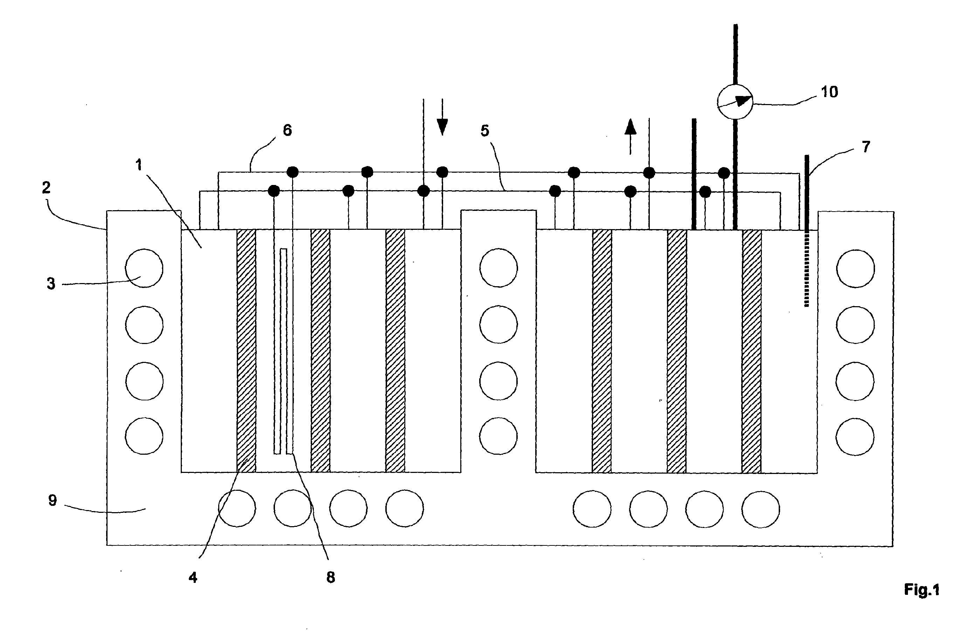

Fig. 1 zeigt eine erfindungsgemäße Vorrichtung zur Speicherung elektrischer Energie in einer bevorzugten Ausführungsform. Die Darstellung ist nicht maßstabsgetreu. Der dargestellte Akkumulator weist zwei Gruppen zu je 4 galvanischen Zellen auf. Die zwei Gruppen sind zur Erhöhung der Ladungsmenge parallel geschaltet. Innerhalb einer Gruppe sind vier galvanische Zellen 1 in Reihe geschaltet. Die elektrische Verschaltung ist jedoch nicht dargestellt. Auch nicht dargestellt sind die einzelnen Zellhüllen, welche als gasdichte und verschweißte Folien ausgebildet sind.

Eine Wärmeleiteinrichtung 8 ist jeder galvanischen Zelle 1 zugeordnet. In diesem Fall besteht die Wärmeleiteinrichtung 8 in einem sogenannten Mikrokanalkühler 8. Die Kanäle des Mikrokanalkühlers 8 werden von einem temperierten zweiten Fluid durchströmt, wobei die Geometrie des Kanals, die Stoffeigenschaften des zweiten Fluids sowie dessen Strömungsgeschwindigkeit so gewählt sind, dass die Strömung eine möglichst hohe Reynolds-Zahl bzw. Nusselt-Zahl aufweist. Zur Versorgung des Mikrokanalkühlers sind die Zuleitung 5 sowie die Leitung 6 vorgesehen. Abhängig von den Temperaturen der galvanischen Zelle 1 und diesem zweiten Fluid wird dieser galvanischen Zelle 1 mit Hilfe des Mikrokanalkühlers 8 Wärme zugeführt oder aber abgeführt.

In einer anderen, nicht dargestellten, Ausführungsform ist der Mikrokanalkühler durch eine sogenannte "heat pipe" ersetzt. Damit gehen weitere Änderungen des Aufbaus einher, ohne dass diese Ausführungsform nicht die Merkmale der Ansprüche aufwiese.

Nach Fig. 1 sind die galvanischen Zellen 1 von einer Zellhalteeinrichtung 2 aufgenommen. Deren Wandung 9 ist dünnwandig aus einem aushärtbaren Kunststoff gefertigt und umschließt die galvanischen Zellen unter Vermeidung von Lufteinschlüssen. Der Innenraum der Zellhaltereinrichtung 2 weist zwei Nester auf, welche durch eine Wand getrennt sind und je 4 galvanische Zellen aufnehmen. Die nicht dargestellten Zellhüllen sind von der Wandung 9 derart umschlossen, dass die Übertragung hoher Wärmeströme zwischen einer galvanischen Zelle 1 und der Wandung 9 möglich ist. In der Wandung 9 der Zellhaltereinrichtung 2 sind Kanäle 3 für ein viertes Fluid ausgebildet. Diese werden während der Herstellung der Zellhaltereinrichtung 2 in die Wandung 9 eingebracht. Diese Kanäle 3 werden von einem vierten Fluid durchströmt, welches Wärme zu- oder abführen kann. Die Einrichtungen zur Förderung dieser Fluide wird von der nicht dargestellten Steuereinrichtung 11 ein- bzw. ausgeschaltet.

Beispielhaft ist in der Figur nur eine erste Messeinrichtung 7 zur Erfassung einer Temperatur dargestellt. Es handelt sich um ein Thermoelement 7, dessen Kontakte mit der nicht dargestellten Steuereinrichtung 11 verbunden sind. Obwohl nicht dargestellt, weist jede dieser galvanischen Zellen 1 ein eigenes Thermoelement 7 auf. Bei dieser Ausführungsform des Akkumulators werden die Thermoelemente 7 jeweils mit einer Frequenz von 100 Hz abgefragt. Die Vorrichtung weist weiter zweite Messeinrichtungen 10 auf. Dargestellt ist ein Amperemeter 10, welches die Stärke des elektrischen Stroms misst, welcher einer galvanischen Zelle 1 zugeführt oder dieser entnommen wird.

Zwischen den einzelnen galvanischen Zellen 1 ist jeweils eine Wärmeleitfolie 4 angeordnet. Diese Wärmeleitfolie 4 dient der Verbesserung des thermischen Kontakts zwischen den einzelnen galvanischen Zellen, auch durch Vergrößerung der tatsächlichen Kontaktflächen. Weiterhin übt diese Wärmeleitfolie 4 zusätzlich elastische Rückstellkräfte auf die galvanischen Zellen zur Vermeidung von deren unerwünschten Bewegungen aus.

Bei Herstellung der Zellhalteeinrichtung 2 aus einem aushärtbaren Kunststoff unter Verwendung einer Gussform wird vorzugsweise ein sehr guter thermischer Kontakt zwischen der Wandung 9 und einer diese Wandung berührende galvanischen Zelle 1 erreicht.

Die Figur 1 zeigt nicht die angrenzenden bzw. wechselwirkenden Einrichtungen zur Versorgung der Vorrichtung. Das sind beispielsweise die Kühlmittelkreisläufe, welche die Mikrokanalkühler 8 sowie die Kanäle 3 versorgen. Auch nicht dargestellt sind verschiedene Anbauteile der Zellhaltereinrichtung 2, welche zur einwandfreien Funktion des Akkumulators erforderlich sind.

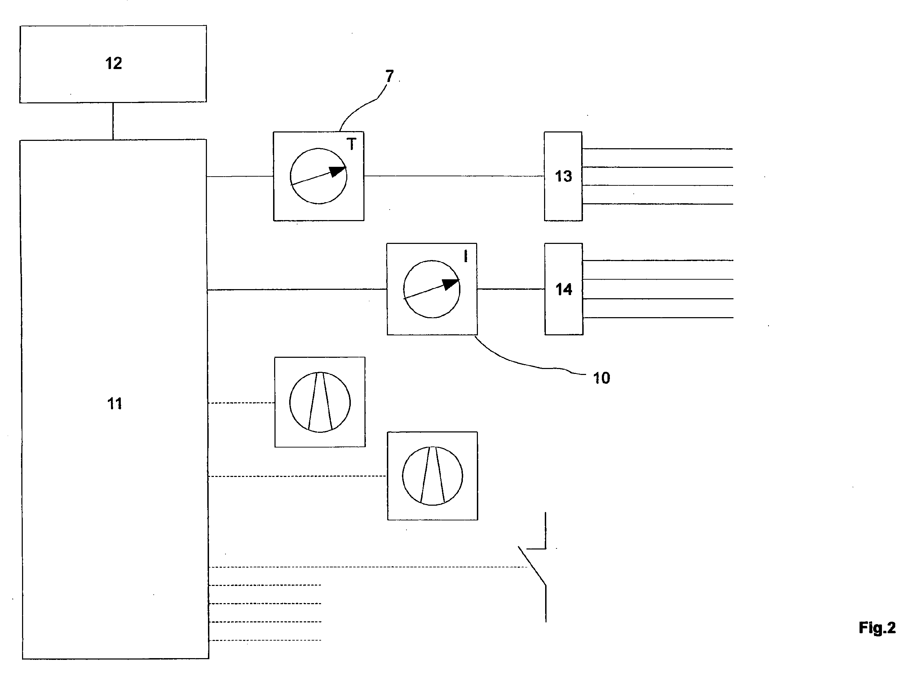

Figur 2 zeigt eine erfindungsgemäße Anordnung von Steuer- und Messeinrichtungen zur Temperierung des Akkumulators. Dargestellt ist eine Steuereinrichtung 11, welcher eine Speichereinrichtung 12 zugeordnet ist. In dieser Speichereinrichtung 12 sind Rechenvorschriften, erfasste und ausgewertete Messwerte sowie Temperaturvorgaben bzw. Zielwerte abgespeichert. Weiter enthält diese Speichereinrichtung 12 Vorgaben zur Temperaturführung des Akkumulators. Mit diesen Vorgaben zur Temperaturführung ist die Steuereinrichtung 11 in der Lage, vorhandene Einrichtungen vorausschauend ein- bzw. abzuschalten. Mit der Steuereinrichtung 11 ist eine erste Messeinrichtung 7 zur Erfassung von Temperaturen angeschlossener galvanischer Zellen verbunden. Mit dieser ersten Messeinrichtung 7 ist ein Umschalter 13 verbunden, an welchem die verschiedenen Thermoelemente angeschlossen sind. Weiterhin ist mit der Steuereinrichtung 11 eine zweite Messeinrichtung 10 zur Erfassung elektrischer Ströme verbunden. Mit dieser zweiten Messeinrichtung 10 ist ein Umschalter 14 verbunden, an welchem die verschiedenen Strommesser angeschlossen sind. Weiter ist an die Steuereinrichtung 11 eine Reihe von Fördereinrichtungen für Fluide sowie Steuerleitungen zu verschiedenen Schaltern angeschlossen.

In dieser Ausbildung der Anordnung von Steuer- und Messeinrichtungen ist die Steuereinrichtung 11 in der Lage, die Temperaturführung des betriebenen Akkumulators vorausschauend durchzuführen. Dabei können die Funktionen der Steuereinrichtung 11 auch von einer anderen vorhandenen Steuerung oder von einem übergeordneten Batteriemanagementsystem übernommen werden.

## Patentansprüche

1. Vorrichtung zur Speicherung elektrischer Energie, welche aufweist:
wenigstens eine galvanische Zelle (1), welche wenigstens teilweise von einer Zellhülle umgeben ist,
wenigstens eine Wärmeleiteinrichtung (8), welche mit dieser galvanischen Zelle (1) wirkverbunden ist, wobei diese Wärmeleiteinrichtung (8) geeignet ist, dieser Zelle Wärmeleistung zuzuführen und/oder aus dieser abzuführen,
eine Zellhalteeinrichtung (2), welche einen Innenraum wenigstens teilweise mit einer Wandung (9) umschließt, wobei dieser Innenraum geeignet ist, diese wenigstens eine galvanische Zelle (1) aufzunehmen und wobei diese Zellhülle wenigstens teilweise mit dieser Wandung (9) wirkverbunden ist,
wenigstens eine erste Messeinrichtung (7), geeignet zur Erfassung einer Temperatur an einer vorgegebenen Position dieser galvanischen Zelle (1),
und eine Steuereinrichtung (11), wenigstens geeignet zur Auswertung eines Signals der vorhandenen ersten Messeinrichtungen (7) und/oder zur Steuerung der vorhandenen Wärmeleiteinrichtungen (8),
wobei zwischen dieser Zellhülle und der Wandung (9) dieser Zellhalteeinrichtung (2) und/oder einer weiteren Zellhülle Wärmeleitmittel (4) angeordnet sind.

2. Vorrichtung gemäß Anspruch 1, **dadurch gekennzeichnet, dass**
diese wenigstens eine zweite Messeinrichtung (10) aufweist, welche geeignet ist, die Stromstärke des elektrischen Stroms in oder aus dieser galvanischen Zelle (1) zu erfassen, und diese Stromstärke dieser Steuereinrichtung (11) zu übermitteln,
und/oder dass diese Vorrichtung eine Speichereinrichtung (12) aufweist, welche dieser Steuereinrichtung (11) zugeordnet ist, wobei diese Speichereinrichtung (12) zum Abspeichern wenigstens von Daten und/oder Rechenvorschriften geeignet ist.

3. Vorrichtung gemäß einem der vorhergehenden Ansprüche, **dadurch gekennzeichnet, dass**
diese wenigstens eine galvanische Zelle (1) vorzugsweise prismatisch ausgebildet ist und/oder als Wärmeleiteinrichtung (8) wenigstens einen im wesentlichen plattenförmigen Stromableiter mit wenigstens einem ersten innerhalb der Zelle angeordneten Bereich und einem zweiten außerhalb der Zelle angeordneten Bereich aufweist, wobei der zweite Bereich mindestens so breit wie der erste Bereich ist,
wobei dieser zweite Bereich vorzugsweise mit einem Kühlkörper wirkverbunden ist, welcher wenigstens Kupfer und/oder Aluminium aufweist,
und dass dieser zweite Bereich und/oder dieser Kühlkörper vorzugsweise von einem ersten Fluid wenigstens teilweise angeströmt wird.

4. Vorrichtung gemäß einem der vorhergehenden Ansprüche, **dadurch**
**gekennzeichnet, dass**
ein Wärmeleitmittel (4) dünnwandig und/oder elektrisch isolierend ausgebildet ist.

5. Vorrichtung gemäß einem der vorhergehenden Ansprüche, **dadurch**
**gekennzeichnet, dass**
ein Wärmeleitmittel (4) benachbarte Bauteile flächig berühren und/oder mit diesen benachbarten Bauteilen stoffschlüssig verbunden ist.

6. Vorrichtung gemäß einem der vorhergehenden Ansprüche, **dadurch**
**gekennzeichnet, dass**
diese wenigstens eine galvanische Zelle (1) wenigstens eine Wärmeleiteinrichtung (8) aufweist,
dass diese Wärmeleiteinrichtung (8) wenigstens einen ersten Fluidkanal mit einem dritten Bereich innerhalb dieser Zelle oder in Wirkverbindung mit dieser Zelle und/oder einen vierten Bereich außerhalb dieser Zelle (1) und ein in diesem ersten Fluidkanal enthaltenes zweites Fluid aufweist, dass dieses zweite Fluid innerhalb dieses ersten Fluidkanals vorzugsweise strömt und/oder Phasenänderungen unterworfen ist,
und dass dieser vierte Bereich vorzugsweise wenigstens teilweise von einem dritten Fluid angeströmt wird und/oder in Wirkverbindung mit einem Kühlkörper steht.

7. Vorrichtung nach einem der vorhergehenden Ansprüche, **dadurch**
**gekennzeichnet, dass**
der Vorrichtung ferner einen Behälter aufweist, welcher wenigstens teilweise mit einer dritten Substanz gefüllt ist,
dass diese dritte Substanz bei vorgegebenen Temperaturen Phasenänderungen durchläuft, wobei diese dritte Substanz vorzugsweise elektrisch nicht leitend ist und/oder diese dritte Substanz besonders bevorzugt CO₂ aufweist
und dass dieser Behälter wenigstens eine Schließeinrichtung aufweist, welche geeignet ist, von dieser Steuereinrichtung wenigstens geöffnet zu werden.

8. Vorrichtung gemäß einem der vorhergehenden Ansprüche, **dadurch**
**gekennzeichnet, dass**
die Wandung (9) dieser Zellhalteeinrichtung (2) wenigstens eine aushärtbare erste Substanz, vorzugsweise Kunststoff, und eingebettete Partikel aufweist, wobei die Wärmeleitfähigkeit dieser Partikel mindestens so groß ist, wie die Wärmeleitfähigkeit der aushärtbaren ersten Substanz, und/oder dass diese galvanischen Zellen (1) von dieser Wandung (9) wenigstens teilweise umgossen sind.
und/oder dass diese Wandung (9) wenigstens einen zweiten Fluidkanal (3) aufweist, welcher von einem vierten Fluid durchströmt wird,
und/oder dass die Wandung eine Verbindungsfläche für eine thermische Wirkverbindung mit einer gekühlten und/oder erwärmten Fläche, beispielsweise einer dafür bestimmten Fläche eines Verdampfers, aufweist,
und/oder dass diese Wandung (9) eine zweite Substanz aufweist, wobei diese Substanz geeignet ist, während des Betriebs der Vorrichtung und/oder bei einer vorgegebenen Temperatur Phasenänderungen zu durchlaufen.

9. Vorrichtung gemäß einem der vorhergehenden Ansprüche, **dadurch**
**gekennzeichnet, dass**
diese wenigstens eine galvanische Zelle (1) Lithium und/oder Lithium-Ionen aufweist, und/oder dass bevorzugt der Elektrolyt Lithium-Ionen aufweist.

10. Verfahren zum Betrieb der Vorrichtung nach einem der vorhergehenden Ansprüche, **dadurch gekennzeichnet, dass**
diese erste Messeinrichtung (7) wenigstens zeitweise die Temperatur an einer vorgegebenen Stelle einer galvanischen Zelle und/oder diese zweite Messeinrichtung (10) die Stärke des elektrischen Stroms in oder aus einer galvanischen Zelle (1) erfasst,
dass diese Steuerungseinrichtung (11) die Temperaturdifferenz aus dieser erfassten Temperatur und einer dazu vorgegebenen Temperatur bestimmt,
und dass diese Steuerungseinrichtung (11), abhängig von der gemessenen Temperatur, der ermittelten Temperaturdifferenz und/oder einer erfassten Stromstärke, eine Wärmeleiteinrichtung (8) und/oder eine Fördereinrichtung für ein Fluid einschaltet oder ausschaltet.

11. Verfahren zur Erzeugung einer Zellhalteeinrichtung(2) für eine Vorrichtung nach Anspruch 8 oder 9 unter Verwendung einer Form und zumindest einer aushärtbaren ersten Substanz mit den Schritten:
a) Anordnen der galvanischen Zellen (1) in dieser Form, wobei Zwischenräume mit Wärmeleitmitteln (4) gefüllt und diese Zellen anschließend gegeneinander gepresst werden,
b) Ausgießen vorgesehener Hohlräume mit dieser aushärtbaren ersten Substanz,
c) Aushärten dieser aushärtbaren ersten Substanz
